# EUROPEAN PATENT APPLICATION

(11) **EP 2 592 862 A1**
(43) Date of publication of application: **15.05.2013**
(21) Application number: 10854349.7
(22) Date of filing: 24.11.2010
(51) Int. Cl.: H04W 28/08

(54) **METHOD AND NETWORK FOR REALIZING NETWORK FUNCTION OF MOBILE SWITCHING CENTER POOL**

(30) Priority: 09.07.2010 CN 201010225282
(71) Applicant: ZTE Corporation, Shenzhen, Guangdong 518057 (CN)
(72) Inventor: LU, Yang, Shenzhen Guangdong 518057 (CN); LIU, Haifang, Shenzhen Guangdong 518057 (CN); XU, Rong, Shenzhen Guangdong 518057 (CN); MIN, Hua, Shenzhen Guangdong 518057 (CN)
(74) Representative: Priori, Enrico
(86) International application number: PCT/CN2010/079046
(87) International publication number: WO 2012/003690

(57) **Abstract**

The disclosure discloses a method and network for realizing a Mobile Switching Center (MSC) pool network function. The method of the disclosure includes the following steps: a Media GateWay (MGW) performs Signal Connection Control Part (SCCP) protocol connection-oriented intermediate node function processing on a signal received from a Radio Access Network (RAN) node, and sends the processed signal to an MSC server; and/or, the MGW determines whether a signal received from the MSC server needs to be intercepted, if it is determined the received signal needs to be intercepted, the MGW intercepts the received signal, performs SCCP protocol connection-oriented intermediate node function processing on the intercepted signal, and sends the processed signal to the RAN node. With the method and network of the disclosure, the MSC pool network function can be realized based on a large number of RAN nodes which do not support an Iu-Flex/A-Flex function in the current network without upgrading or replacing all hardware, thereby the investment cost is saved.

## Description

### TECHNICAL FIELD

The disclosure relates to signal data transmission technology, and in particular to a method and network for realizing a Mobile Switching Center (MSC) pool network function.

### BACKGROUND

The implementation of a connection-oriented service function specified in the Signal Connection Control Part (SCCP) protocol is establishing a SCCP signal connection between a source node and a destination node through 0 or more than 1 SCCP intermediate nodes. Such a signal connection is similar to a virtual circuit in packet switching and applied to transmitting a large amount of batched data.

In a current No.7 signaling network, the SCCP connection-oriented service function is widely applied to an A interface and a Iu interface.

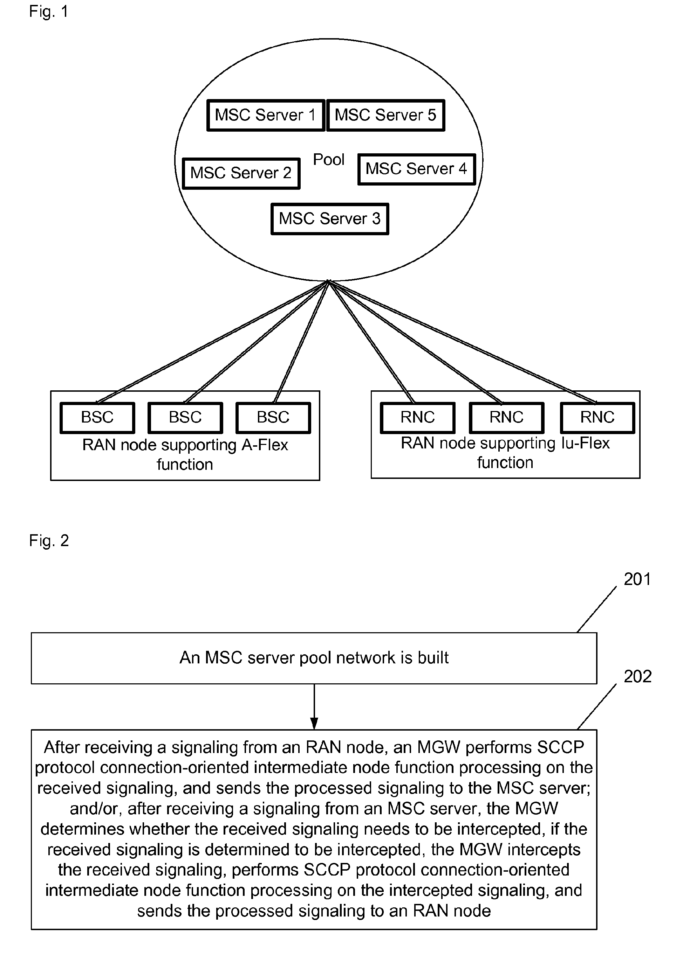

The MSC pool is an important networking way, which breaks the limit that a Radio Access Network (RAN) node can only be connected to an MSC server in a traditional network. Fig. 1 shows a diagram of a standard MSC pool networking structure; it can be seen from Fig. 1 that in the MSC networking, an RAN node can be connected to multiple MSC servers, and the multiple MSC servers constitute a pool to provide service for the connected RAN. The MSC pool networking has the following advantages:
(1) load sharing: multiple MSC servers share network loads, thus the resource utilization of the whole core network is improved, and the equipment investment is saved;
(2) disaster recovery: the disaster recovery backup of MSC level is realized, namely, when an MSC server goes down, service on the MSC server is implemented by other MSC servers;
(3) interoffice location update is reduced, and then the flow of location update signalling at a C/D interface is reduced; and
(4) interoffice switching is reduced, a drop call rate is lowered, and then the user communication quality is improved.

However, it is necessary to require an RAN node to support an Iu-Flex/A-Flex function on hardware and software in order to build a network by way of MSC pool. There are a large number of RAN nodes which do not support the Iu-Flex/A-Flex function in a current network; if these RAN nodes are used for building an MSC pool network, it is needed to perform software update on these RAN nodes which do not support the Iu-Flex/A-Flex function, and even replace all hardware, which will increase the input cost greatly.

### SUMMARY

In view of the above, the disclosure mainly aims to provide a method and network for realizing an MSC pool network function, which can realize an MSC pool network function based on a large number of RAN nodes which do not support the Iu-Flex/A-Flex function in the current network without upgrading or replacing all hardware, thereby the input cost is saved.

For achieving above aim, the following technical solutions are provided.

A method for realizing an MSC pool network function is provided, which includes building an MSC server pool network; and the method further includes the following steps:
after receiving a signal from an RAN node of the MSC server pool network, a Media GateWay (MGW) of the MSC server pool network performs SCCP protocol connection-oriented intermediate node function processing on the received signal, and sends the processed signal to an MSC server of the MSC server pool network; and/or, after receiving a signal from the MSC server, the MGW determines whether the received signal needs to be intercepted, and if it is determined the received signal needs to be intercepted, the MGW intercepts the received signal, performs SCCP protocol connection-oriented intermediate node function processing on the intercepted signal, and sends the processed signal to the RAN node.

In above solution, the step of building an MSC server pool network may include: adding configuration information related to implementation of an NAS Node Selection Function (NNSF).

In above solution, the step of adding configuration information related to implementation of an NNSF may include:
the MGW configures that a signal point of the MGW itself has an SCCP;
the MGW adds a pool function switch attribute to a related configuration item of a signal point of each RAN node, sets the attribute as enabling a pool function for an RAN node needing proxy, and sets the attribute as closing a pool function for an RAN node not needing proxy;
the MGW is configured to intercept all signal sent to the RAN node enabling a pool function;
all the RAN nodes configure Signal Point Codes (SPCs) of MSC servers as SPCs of corresponding MGWs; or, the MGW configures its own SPC as an SPC of its corresponding MSC server;
the MGW configures the SPC of each of the MSC servers, and configures a corresponding Base Station System Application Part (BSSAP) subsystem and/or Radio Access Network Application Part (RANAP) subsystem for each signal point; correspondingly, the MGW configures an SPC of the RAN node, and configures a corresponding BSSAP subsystem and/or RANAP subsystem for each signal point while configuring a local BSSAP subsystem and/or RANAP subsystem.

In above solution, the step of determining whether the received signal needs to be intercepted may include:
the MGW determines whether the received signal needs to be intercepted according to saved configuration information.

In above solution, when the received signal is a Connection Request (CR) signal sent by the RAN node, the step of performing SCCP protocol connection-oriented intermediate node function processing on the received signal and sending the processed signal to the MSC server may include:
a Message Transfer Part level 3 (MTP3)/an MTP3-User Adaption layer (M3UA) of the MGW forwards the received CR signal to an SCCP of the MGW;
after receiving the CR signal, the SCCP determines whether the RAN node to which an SPC in the CR signal corresponds enables a pool function according to saved configuration information; if it is determined the pool function is enabled, the SCCP enters an SCCP protocol connection-oriented intermediate node function processing flow, obtains an SPC of a selected MSC server, and then modifies a source signal point code in the CR signal into an SPC of the RAN node, modifies a destination SPC into the SPC of the selected MSC server, sends the modified CR signal to the selected MSC server according to an SCCP protocol, and saves information of each signal point on a related connection segment and a reference number of an SCCP connection segment in an intermediate point data area of the MGW.

In above solution, when the received signal is a connection response (CC) signal returned by the MSC server, the step of performing SCCP protocol connection-oriented intermediate node function processing on the intercepted signal and sending the processed signal to the RAN node may include:
the MTP3/M3UA forwards the received CC signal to the SCCP;
after receiving the CC signal, the SCCP determines whether the RAN node to which an SPC in the CC signal corresponds enables a pool function according to the saved configuration information; if it is determined the pool function is enabled, the SCCP modifies a source SPC in the CC signal into the SPC of the MGW, modifies a destination SPC into the SPC of the RAN node, modifies calling address information into address information of the MGW, and then sends the modified CC signal to the RAN node according to the SCCP protocol, and saves information of each signal point on a related connection segment and a reference number of an SCCP connection segment in an intermediate point data area of the MGW.

In above solution, when the received signal is a Data Transfer (DT) signal sent by the MSC server, the step of performing SCCP protocol connection-oriented intermediate node function processing on the intercepted signal and sending the processed signal to the RAN node may include:
the MTP3/M3UA forwards the received DT signal to the SCCP;
after receiving the DT signal, the SCCP modifies a source SPC in the DT signal into the SPC of the MGW, modifies a destination SPC into the SPC of the RAN node, and then forwards the modified DT signal to the RAN node according to the saved information of each signal point on the related connection segment and the reference number of the SCCP connection segment and based on the SCCP protocol; and/or
when the received signal is a DT signal sent by the RAN node, the step of performing SCCP protocol connection-oriented intermediate node function processing on the received signal and sending the processed DT signal to the MSC server may include:
   the MTP3/M3UA forwards the received DT signal to the SCCP;
after receiving the DT signal, the SCCP modifies a source SPC in the DT signal into the SPC of the RAN node, modifies a destination SPC into the SPC of the selected MSC server, and then forwards the modified DT signal to the selected MSC server according to the saved information of each signal point on the related connection segment and the reference number of the SCCP connection segment and based on the SCCP protocol.

In above solution, when the received signal is a connection release (RLSD) signal sent by the MSC server, the step of performing SCCP protocol connection-oriented intermediate node function processing on the intercepted signal and sending the processed signal to the RAN node may include:
the MTP3/M3UA forwards the received RLSD signal to the SCCP;
after receiving the RLSD signal, the SCCP modifies a source SPC in the RLSD signal into the SPC of the MGW, modifies a destination SPC into the SPC of the RAN node, and then forwards the modified RLSD signal to the RAN node according to the saved information of each signal point on the related connection segment and the reference number of the SCCP connection segment and based on the SCCP protocol; or,
when the received signal is an RLSD signal sent by the RAN node, the step of performing SCCP protocol connection-oriented intermediate node function processing on the received signal and sending the processed signal to the MSC server may include:
   the MTP3/M3UA forwards the received RLSD signal to the SCCP;
after receiving the RLSD signal, the SCCP modifies a source SPC in the RLSD signal into the SPC of the RAN node, modifies a destination SPC into the SPC of the MSC server, and then forwards the modified RLSD signal to the selected MSC server according to the saved information of each signal point on the related connection segment and the reference number of the SCCP connection segment and based on the SCCP protocol.

In above solution, the method may further include: the SCCP returns a return confirmation (RLC) signal to the MSC server according to the SCCP protocol after forwarding the RLSD signal to the RAN node; or
the SCCP returns an RLC signal to the RAN node according to the SCCP protocol after forwarding the RLSD signal to the MSC server.

In above solution, when the received signal is a CR signal sent by the MSC server, the step of performing SCCP protocol connection-oriented intermediate node function processing on the intercepted signal and sending the processed signal to the RAN node may include:
the MTP3/M3UA forwards the received CR signal to the SCCP;
after receiving the CR signal, the SCCP modifies a source SPC in the received CR signal into the SPC of the MGW, modifies a destination SPC into the SPC of the RAN node, and then sends the modified CR signal to the RAN node according to the SCCP protocol, and saves information of each signal point on a related connection segment and a reference number of an SCCP connection segment in an intermediate point data area of the MGW;
when the received signal is a CC signal returned by the RAN node, the step of performing SCCP protocol connection-oriented intermediate node function processing on the received signal and sending the processed signal to the MSC server may include:
   the MTP3/M3UA forwards the received CC signal to the SCCP;
after receiving the CC signal, the SCCP modifies a source SPC in the received CC signal into the SPC of the RAN node, modifies a destination SPC into the SPC of the MSC server, and then sends the modified CC signal to the MSC server according to the SCCP protocol, and saves information of each signal point on the related connection segment and the reference number of the SCCP connection segment in the intermediate point data area of the MGW.

In above solution, the method may further include: when it is determined that interception is not needed, and a destination SPC in a message is not a local SPC, the MGW directly sends the received signal to the RAN node.

In another aspect, a network for realizing an MSC pool network function is provided, which includes an RAN node, an MGW and an MSC server; wherein,
the RAN node is configured to send a signal to the MGW, and/or receive a signal from the MGW;
the MGW is configured to, after receiving a signal from the RAN node, perform SCCP protocol connection-oriented intermediate node function processing on the received signal and send the processed signal to the MSC server; and/or, the MGW is configured to, after receiving a signal from the MSC server, determine whether the received signal needs to be intercepted, and if it is determined the received signal needs to be intercepted, intercept the received signal, perform SCCP protocol connection-oriented intermediate node function processing on the intercepted signal, and send the processed signal to the RAN node; and
the MSC server is configured to receive a signal from the MGW, and/or send a signal to the MGW.

In above solution, the MGW may be further configured to configure that a signal point of the MGW itself has an SCCP, add a pool function switch attribute to a related configuration item of a signal point of the RAN node, set the attribute as enabling a pool function for an RAN node needing proxy, set the attribute as closing a pool function for an RAN node not needing proxy; configured to intercept all signals sent to the RAN node enabling a pool function; configure an SPC of each MSC server, configure a corresponding BSSAP subsystem and/or RANAP subsystem for each signal point; correspondingly configure an SPC of the RAN node, and configure a corresponding BSSAP subsystem and/or RANAP subsystem for each signal point while configuring a local BSSAP subsystem and/or RANAP subsystem;
the RAN node may be further configured to configure an SPC of its own MSC server as an SPC of its corresponding MGW; or
the MGW may be further configured to configure its own SPC as an SPC of its corresponding MSC server.

In above solution, the MGW may further include an MTP3/M3UA module and an SCCP module; wherein,
the MTP3/M3UA module is configured to, after receiving a signal from the RAN node, forward the received signal to the SCCP module; and/or determine whether a received signal from the MSC server needs to be intercepted according to saved configuration information, and forward the received signal to the SCCP module if it is determined the received signal needs to be intercepted;
the SCCP module is configured to, after receiving a signal from the MTP3/M3UA module, process the signal, and send the processed signal to the MSC server and/or the RAN node according to an SCCP protocol.

In above solution, the MGW may further include an NNSF module, which is configured to calculate which MSC server serves as a selected MSC server according to a load control algorithm of a service layer, and send the selected result to the SCCP module;
the SCCP module is further configured to, after receiving the selected result from the NNSF module, find an SPC of the selected MSC server according to the saved SPC to which the MSC server corresponds.

In above solution, the MGW may be further configured to, when it is determined that interception is not needed, directly send a received signal to the RAN node.

With the method and network for realizing an MSC pool network function provided by the disclosure, after receiving a signal from an RAN node, an MGW performs SCCP protocol connection-oriented intermediate node function processing on the received signal, and sends the processed signal to the MSC server; and/or, after receiving a signal from an MSC server, the MGW determines whether the received signal needs to be intercepted, if it is determined the received signal needs to be intercepted, the MGW intercepts the received signal, performs SCCP protocol connection-oriented intermediate node function processing on the intercepted signal, and sends the processed signal to an RAN node, thus, the MSC pool network function can be realized based on a large number of RAN nodes which do not support the Iu-Flex/A-Flex function in the current network without upgrading or replacing all hardware, thereby the input cost is saved.

In addition, when it is determined that interception is not needed, and a destination SPC in a message is not a local SPC, the MGW directly sends the received signal to the RAN node, thus, signal forwarding between the MSC server and the RAN node which supports the Iu-Flex/A-Flex function can be realized compatibly, thereby the current RAN node devices can be integrated well, and the input cost is saved.

### BRIEF DESCRIPTION OF THE DRAWINGS

Fig. 1 shows a diagram of a standard MSC pool networking structure;
Fig. 2 shows a flowchart of a method for realizing an MSC pool network function according to the disclosure;
Fig. 3 shows a structure diagram of an MSC server pool network built in the disclosure; and
Fig. 4 shows a structure diagram of a network for realizing an MSC pool network function according to the disclosure.

### DETAILED DESCRIPTION

The disclosure is described below with reference to the accompanying drawings and embodiments in detail.

In the following description, an RAN node which does not support an Iu-Flex/A-Flex function but needs an MGW as proxy to implement the Iu-Flex/A-Flex function is called an RAN node needing proxy for short, an RAN node which supports the Iu-Flex/A-Flex function is called an RAN node not needing proxy for short, and an switch which supports MSC server pool networking is called a pool function switch.

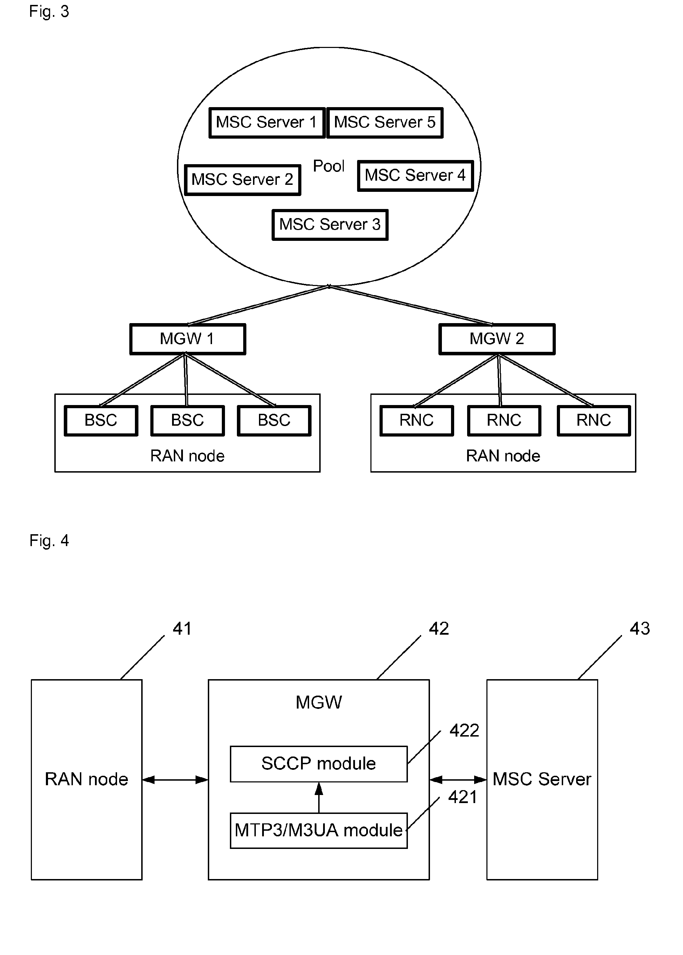

As shown in Fig. 2, a method for realizing an MSC pool network function provided by the disclosure includes the following steps.
Step 201: an MSC server pool network is built;
here, Fig. 3 shows the structure diagram of the MSC server pool network; it can be seen from Fig. 3 that the MSC server pool network includes: a pool composed of multiple MSC servers, an MGW and an RAN node;
the difference between the MSC server pool network and the MSC pool network is that the Iu-Flex/A-Flex function is implemented by an MGW as proxy of an RAN node, namely, an MSC server in the pool is selected by an MGW instead of an RAN node;
when building the MSC server pool network, it is needed to add configuration information related to implementation of an NNSF, specifically including the following steps:
   Step 1: the MGW configures that a signal point of the MGW itself has an SCCP;
   here, the signal point having an SCCP means the MGW itself having an SCCP;
   Step 2: the MGW adds a pool function switch attribute to a related configuration item of a signal point of each RAN node, sets the attribute as enabling a pool function for an RAN node needing proxy, and sets the attribute as closing a pool function for an RAN node not needing proxy;
   here, the configuration item of the signal point of the RAN node can be understood as description information about the RAN node, including: the attribute, the network element type, the feature and so on of the RAN node;
   Step 3: the MGW is configured to intercept all signals sent to the RAN node enabling a pool function;
   Step 4: all the RAN nodes configure SPCs of the MSC servers as SPCs of corresponding MGWs; or, the MGW configures its own SPC as an SPC of a corresponding MSC server;
   here, the SPC means an identity to which a signal point corresponds;
   the effect realized by the fact that an RAN node configures an SPC of a MSC server as an SPC of its corresponding MGW is the same as the effect realized by the fact that an MGW configures its own SPC as an SPC of its corresponding MSC server, that is to say, a destination SPC in a signal sent by the RAN node is the SPC of the MGW;
   Step 5: the MGW configures the SPC of each MSC server, and configures a corresponding BSSAP subsystem and/or RANAP subsystem for each signal point; correspondingly, the MGW configures the SPC of the RAN node, and configures a corresponding BSSAP subsystem and/or RANAP subsystem for each signal point while configuring a local BSSAP subsystem and/or RANAP subsystem;
   when configuring a subsystem, if the type of the RAN node is a Base Station Controller (BSC), it is needed to configure the subsystem as a BSSAP subsystem; if the type of the RAN node is a Radio Network Controller (RNC), it is needed to configure the subsystem as an RANAP subsystem; for the MGW, the type of the subsystem is configured based on which type of the RAN node is supported; if the two types of the RAN node are supported, it is needed to configure the BSSAP subsystem and the RANAP subsystem, respectively;
   the subsystem is configured as a BSSAP subsystem means that the MGW can support a call of A-Flex function; the subsystem is configured as an RANAP subsystem means that the MGW can support a call of Iu-Flex function;
   the NNSF function means realizing the Iu-Flex/A-Flex function by the proxy of the RAN node;
   other data needed to be configured is the same as the data needed to be configured in the MSC pool network in a related art.
   Step 202: after receiving a signal from an RAN node, the MGW performs SCCP protocol connection-oriented intermediate node function processing on the received signal, and sends the processed signal to the MSC server; and/or, after receiving a signal from the MSC server, the MGW determines whether the received signal needs to be intercepted, if it is determined the received signal needs to be intercepted, the MGW intercepts the received signal, performs SCCP protocol connection-oriented intermediate node function processing on the intercepted signal, and sends the processed signal to an RAN node;
here, the step of determining whether the received signal needs to be intercepted is:
   the MGW determines whether the received signal needs to be intercepted according to saved configuration information;
   when the received signal is a CR signal sent by the RAN node, a source SPC in the CR signal is the SPC of the RAN node, and a destination SPC is the SPC of the MGW; the step of performing SCCP protocol connection-oriented intermediate node function processing on the received signal and sending the processed signal to the MSC server is:
   the MTP3/M3UA of the MGW forwards the received CR signal to the SCCP of the MGW;
   after receiving the CR signal, the SCCP determines whether the RAN node to which the SPC in the CR signal corresponds enables a pool function according to the saved configuration information; if the pool function is enabled, the SCCP enters an SCCP protocol connection-oriented intermediate node function processing flow, obtains an SPC of a selected MSC server, and then modifies the source signal point code in the CR signal into the SPC of the RAN node, modifies the destination SPC into the SPC of the selected MSC server, sends the modified CR signal to the selected MSC server according to the SCCP protocol, and saves information of each signal point on a related connection segment and other information in the intermediate point data area of the MGW, wherein the information of each signal point can be the SPC of each signal point and the like, and the other information can be a reference number of an SCCP connection segment and the like; if the pool function is not enabled, the current SCCP connection-oriented destination node processing flow is adopted;
   wherein, the CR signal includes a feature field representing CR, and the SCCP knows it is a CR signal according to the feature field; the NNSF module calculates which MSC server serves as a selected MSC server according to a load control algorithm of a service layer, and sends the selected result to the SCCP; and then the SCCP knows the selected MSC server according to the selected result, and finds the SPC of the selected MSC server according to the saved SPC to which the MSC server corresponds;
   after the information of each signal point on the related connection segment and other information are saved in the intermediate point data area of the MGW, it is indicated that the path through which the MGW reaches the selected MSC server has been recorded;
when the received signal is a CC signal returned by the MSC server, a source SPC in the CC signal is the SPC of the MSC server, and a destination SPC is the SPC of the RAN node; the step of performing the SCCP protocol connection-oriented intermediate node function processing on the intercepted signal and sending the processed signal to the RAN node is:
   the MTP3/M3UA forwards the received CC signal to the SCCP;
   after receiving the CC signal, the SCCP determines whether the RAN node to which the SPC in the CC signal corresponds enables a pool function according to the saved configuration information; if the pool function is enabled, the SCCP modifies the source SPC in the CC signal into the SPC of the MGW, modifies the destination SPC into the SPC of the RAN node, modifies calling address (CGA) information into address information of the MGW, and then sends the modified CC signal to the RAN node according to the SCCP protocol, and saves information of each signal point on a related connection segment and other information in the intermediate point data area of the MGW, wherein the information of each signal point can be an SPC of each signal point and the like, and the other information can be a reference number of an SCCP connection segment and the like; if the pool function is not enabled, the current SCCP connection-oriented destination node processing flow is adopted;
wherein, the CC signal includes a feature field representing CC, and the SCCP knows it is the CC signal according to the feature field; after the RAN node receives the CC signal sent by the MGW, it is indicated that the SCCP connection-oriented signal connection relationship between the RAN node and the MSC server through the MGW as an intermediate node has been established;
after the information of each signal point on the related connection segment and other information are saved in the intermediate point data area of the MGW, it is indicated that the path through which the MGW reaches the RAN node has been recorded; thus, after the information of each signal point on the related connection segment and other information are saved in the intermediate point data area of the MGW, it is indicated that the path for transferring a message between the RAN node and the selected MSC server via the MGW has been recorded, after that, a service signal between the RAN node and the selected server is transferred on the recorded path;
when the received signal is a DT signal sent by the MSC server, a source SPC in the DT signal is the SPC of the MSC server, and a destination SPC is the SPC of the RAN node; the step of performing SCCP protocol connection-oriented intermediate node function processing on the intercepted signal and sending the processed signal to the RAN node is:
   the MTP3/M3UA forwards the received DT signal to the SCCP;
   after receiving the DT signal, the SCCP modifies the source SPC in the DT signal into the SPC of the MGW, modifies the destination SPC into the SPC of the RAN node, and then forwards the modified DT signal to the RAN node based on the SCCP protocol and according to the saved information of each signal point on the related connection segment and other information;
   wherein, the DT signal includes a feature field representing DT, and the SCCP knows it is the DT signal according to the feature field;
   when the received signal is other connection-oriented signal sent by the MSC server, the other connection-oriented signal is that, such as an Inactivity Test (IT) signal, except the DT signal, the RLSD signal, the RLC signal, the CR signal and the CC signal,; the intercepting and sending process of the IT signal is same as that of the DT signal;
   when the received signal is a DT signal sent by the RAN node, a source SPC in the DT signal is the SPC of the RAN node, and a destination SPC is the SPC of the MGW; the step of performing SCCP protocol connection-oriented intermediate node function processing on the received signal and sending the processed signal to the MSC server is:
   the MTP3/M3UA forwards the received DT signal to the SCCP;
   after receiving the DT signal, the SCCP modifies the source SPC in the DT signal into the SPC of the RAN node, modifies the destination SPC into an SPC of a selected MSC server, and then forwards the modified DT signal to the selected MSC server based on the SCCP protocol and according to the saved information of each signal point on the related connection segment and other information;
   when the received signal is other connection-oriented signal sent by the RAN node, the other connection-oriented signal is that, such as an IT signal, except the DT signal, the RLSD signal, the RLC signal, the CR signal and the CC signal,; the intercepting and sending process of the IT signal is same as that of the DT signal;
when the received signal is an RLSD signal sent by the MSC server, a source SPC in the RLSD signal is the SPC of the MSC server, and a destination SPC is the SPC of the RAN node; the step of performing SCCP protocol connection-oriented intermediate node function processing on the intercepted signal and sending the processed signal to the RAN node is:
   the MTP3/M3UA forwards the received RLSD signal to the SCCP;
   after receiving the RLSD signal, the SCCP modifies the source SPC in the RLSD signal into the SPC of the MGW, modifies the destination SPC into the SPC of the RAN node, and then forwards the modified RLSD signal to the RAN node based on the SCCP protocol and according to the saved information of each signal point on the related connection segment and other information;
wherein the RLSD signal includes a feature field representing RLSD, and the SCCP knows it is the RLSD signal according to the feature field;
the SCCP returns an RLC signal to the MSC server according to the SCCP protocol after forwarding the RLSD signal to the RAN node; wherein a source SPC in the RLC signal sent by the MGW is the SPC of the RAN node, and a destination SPC is the SPC of the MSC server;
when the received signal is an RLSD signal sent by the RAN node, a source SPC in the RLSD signal is the SPC of the RAN node, and a destination SPC is the SPC of the MGW; the step of performing the SCCP protocol connection-oriented intermediate node function processing on the received signal and sending the processed signal to the MSC server is:
   the MTP3/M3UA forwards the received RLSD signal to the SCCP;
   after receiving the RLSD signal, the SCCP modifies the source SPC in the RLSD signal into the SPC of the RAN node, modifies the destination SPC into the SPC of the MSC server, and then forwards the modified RLSD signal to a selected MSC server based on the SCCP protocol and according to the saved information of each signal point on the related connection segment and other information;
   the SCCP returns an RLC signal to the RAN node according to the SCCP protocol after forwarding the RLSD signal to the MSC server; wherein a source SPC in the RLC signal sent by the MGW is the SPC of the MGW, and a destination SPC is the SPC of the RAN node;
when the received signal is a CR signal sent by the MSC server, a source SPC in the CR signal is the SPC of the MSC server, and a destination SPC is the SPC of the RAN node; the step of performing the SCCP protocol connection-oriented intermediate node function processing on the intercepted signal and sending the processed signal to the RAN node is:
   the MTP3/M3UA forwards the received CR signal to the SCCP;
   after receiving the CR signal, the SCCP modifies the source SPC in the CR signal into the SPC of the MGW, modifies the destination SPC into the SPC of the RAN node, and then forwards the modified CR signal to the RAN node according to SCCP protocol, and saves information of each signal point on a related connection segment and other information in the intermediate point data area of the MGW;
   wherein, when it is needed to perform service switching, the MSC server sends the CR signal to the RAN node;
when the received signal is a CC signal returned by the RAN node, a source SPC in the CC signal is the SPC of the RAN node, and a destination SPC is the SPC of the MGW; the step of performing the SCCP protocol connection-oriented intermediate node function processing on the received signal and sending the processed signal to the MSC server is:
   the MTP3/M3UA forwards the received CC signal to the SCCP;
   after receiving the CC signal, the SCCP modifies the source SPC in the CC signal into the SPC of the RAN node, modifies the destination SPC into the SPC of the MSC server, and then sends the modified CC signal to the MSC server according to SCCP protocol, and saves the information of each signal point on the related connection segment and other information in the intermediate point data area of the MGW;
   after the MSC server receives the CC signal sent by the MGW, it is indicated that the SCCP connection-oriented signal connection relationship between the RAN node and the MSC server through the MGW as an intermediate node has been established.

In above process, the method may further include:
when it is determined that interception is not needed, and a destination SPC in a message is not a local SPC, the MGW directly sends the received signal to the RAN node; wherein, the local SPC is the SPC of the MGW.

For realizing the above method, the disclosure further provides a network for realizing an MSC pool network function; as shown in Fig. 4, the network includes: an RAN node 41, an MGW 42 and an MSC server 43; wherein,
the RAN node 41 is configured to send a signal to the MGW 42, and/or receive a signal from the MGW 42;
the MGW 42 is configured to, after receiving a signal from the RAN node 41, perform SCCP protocol connection-oriented intermediate node function processing on the received signal and send the processed signal to the MSC server 43; and/or, the MGW 42 is configured to, after receiving a signal from the MSC server 43, determine whether the received signal needs to be intercepted, and if it is determined the received signal needs to be intercepted, intercept the received signal, perform SCCP protocol connection-oriented intermediate node function processing on the intercepted signal, and send the processed signal to the RAN node 41; and
the MSC server 43 is configured to receive a signal from the MGW 42, and/or send a signal to the MGW 42.

Here, it should be noted that an MSC server pool network includes multiple MSC servers, and multiple MSC servers compose a pool.
In the above network, the RAN node 41 is further configured to configure an SPC of its own MSC server as an SPC of its corresponding MGW; or
the MGW 42 is further configured to configure its own SPC as an SPC of its corresponding MSC server;
the MGW 42 is further configured to configure that a signal point of the MGW itself has an SCCP; add a pool function switch attribute to a related configuration item of a signal point of the RAN node 42, set the attribute as enabling a pool function for an RAN node 41 needing proxy, set the attribute as closing a pool function for an RAN node 41 not needing proxy; configured to intercept all signals sent to the RAN node 41 enabling a pool function; configure an SPC of each MSC server 43, and configure a corresponding BSSAP subsystem and/or an RANAP subsystem for each signal point; correspondingly configure an SPC of the RAN node 41, and configure a corresponding BSSAP subsystem and/or an RANAP subsystem for each signal point while configuring a local BSSAP subsystem and/or RANAP subsystem.

The MGW 42 may further include: an MTP3/M3UA module 421 and an SCCP module 422; wherein,
the MTP3/M3UA module 421 is configured to, after receiving a signal from the RAN node 41, forward the received signal to the SCCP module 422; and/or determine whether a received signal from the MSC server 43 needs to be intercepted according to saved configuration information, and forward the received signal to the SCCP module 422 if it is determined the received signal needs to be intercepted;
the SCCP module 422 is configured to, after receiving a signal from the MTP3/M3UA module 421, process the signal, and send the processed signal to the MSC server 43 and/or the RAN node 41 according to the SCCP protocol.

In the above network, the MGW 42 may further include a storage module, which is configured to save configuration information, and information of each signal point on a related connection segment and other information.

The MGW 42 is further configured to, when it is determined that interception is not needed, directly send a received signal to the RAN node 41.

The MGW 42 may further include an NNSF module, which is configured to calculate which MSC server serves as a selected MSC server according to a load control algorithm of a service layer, and send the selected result to the SCCP module 422;
the SCCP module 422 is further configured to, after receiving the selected result from the NNSF module, find an SPC of the selected MSC server according to the saved SPC to which the MSC server corresponds.

The SCCP module 422 is further configured to return an RLC signal to the MSC server 43 according to an SCCP protocol, or return an RLC signal to the RAN node 41 according to the SCCP protocol;
the MSC server 43 is further configured to receive an RLC signal from the SCCP module 422;
the RAN node 41 is further configured to receive an RLC signal from the SCCP module 422.

Here, the specific processing procedure of the SCCP module 422 in the network of the disclosure has been described above, so it will not be repeated.

The above is only the preferred embodiment of the disclosure and not intended to limit the scope of the claims of the disclosure; any modifications, equivalent replacements, improvements and the like within the spirit and principle of the disclosure shall fall within the scope of the claims of the disclosure.

## Claims

1. A method for realizing a Mobile Switching Center (MSC) pool network function, comprising: building an MSC server pool network; and further comprising:
after a Media GateWay (MGW) of the MSC server pool network receives a signal from a Radio Access Network (RAN) node of the MSC server pool network, performing, by the MGW of the MSC server pool network, Signal Connection Control Part (SCCP) protocol connection-oriented intermediate node function processing on the received signal, and sending the processed signal to an MSC server of the MSC server pool network; and/or
after the MGW receives a signal from the MSC server, determining, by the MGW, whether the received signal needs to be intercepted; if it is determined the received signal needs to be intercepted, intercepting, by the MGW, the received signal, performing SCCP protocol connection-oriented intermediate node function processing on the intercepted signal, and sending the processed signal to the RAN node.

2. The method according to claim 1, wherein the building an MSC server pool network comprises: adding configuration information related to implementation of a Non-Access Stratum Node Selection Function (NNSF).

3. The method according to claim 2, wherein the adding configuration information related to implementation of an NNSF comprises:
the MGW configures that a signal point of the MGW itself has an SCCP;
the MGW adds a pool function switch attribute to a related configuration item of a signal point of each RAN node, sets the attribute as enabling a pool function for an RAN node needing proxy, and sets the attribute as closing a pool function for an RAN node not needing proxy;
the MGW is configured to intercept all signals sent to the RAN node enabling a pool function;
all the RAN nodes configure Signal Point Codes (SPCs) of MSC servers as SPCs of corresponding MGWs; or, the MGW configures its own SPC as an SPC of its corresponding MSC server;
the MGW configures the SPC of each of the MSC servers, and configures a corresponding Base Station System Application Part (BSSAP) subsystem and/or Radio Access Network Application Part (RANAP) subsystem for each signal point; correspondingly, the MGW configures an SPC of the RAN node, and configures a corresponding BSSAP subsystem and/or RANAP subsystem for each signal point while configuring a local BSSAP subsystem and/or RANAP subsystem.

4. The method according to claim 2 or 3, wherein the determining whether the received signal needs to be intercepted comprises:
the MGW determines whether the received signal needs to be intercepted according to saved configuration information.

5. The method according to claim 1, 2 or 3, wherein when the received signal is a Connection Request (CR) signal sent by the RAN node, the performing SCCP protocol connection-oriented intermediate node function processing on the received signal and sending the processed signal to the MSC server comprises:
a Message Transfer Part level 3 (MTP3)/an MTP3-User Adaption layer (M3UA) of the MGW forwards the received CR signal to an SCCP of the MGW;
after receiving the CR signal, the SCCP determines whether the RAN node to which an SPC in the CR signal corresponds enables a pool function according to saved configuration information; if it is determined the pool function is enabled, the SCCP enters an SCCP protocol connection-oriented intermediate node function processing flow, obtains an SPC of a selected MSC server, and then modifies a source signal point code in the CR signal into an SPC of the RAN node, modifies a destination SPC into the SPC of the selected MSC server, sends the modified CR signal to the selected MSC server according to an SCCP protocol, and saves information of each signal point on a related connection segment and a reference number of an SCCP connection segment in an intermediate point data area of the MGW.

6. The method according to claim 5, wherein when the received signal is a connection response (CC) signal returned by the MSC server, the performing SCCP protocol connection-oriented intermediate node function processing on the intercepted signal and sending the processed signal to the RAN node comprises:
the MTP3/M3UA forwards the received CC signal to the SCCP;
after receiving the CC signal, the SCCP determines whether the RAN node to which an SPC in the CC signal corresponds enables a pool function according to the saved configuration information; if it is determined the pool function is enabled, the SCCP modifies a source SPC in the CC signal into the SPC of the MGW, modifies a destination SPC into the SPC of the RAN node, modifies calling address information into address information of the MGW, and then sends the modified CC signal to the RAN node according to the SCCP protocol, and saves information of each signal point on a related connection segment and a reference number of an SCCP connection segment in an intermediate point data area of the MGW.

7. The method according to claim 6, wherein when the received signal is a Data Transfer (DT) signal sent by the MSC server, the performing SCCP protocol connection-oriented intermediate node function processing on the intercepted signal and sending the processed signal to the RAN node comprises:
the MTP3/M3UA forwards the received DT signal to the SCCP;
after receiving the DT signal, the SCCP modifies a source SPC in the DT signal into the SPC of the MGW, modifies a destination SPC into the SPC of the RAN node, and then forwards the modified DT signal to the RAN node according to the saved information of each signal point on the related connection segment and the reference number of the SCCP connection segment and based on the SCCP protocol; and/or
when the received signal is a DT signal sent by the RAN node, the performing SCCP protocol connection-oriented intermediate node function processing on the received signal and sending the processed DT signal to the MSC server comprises:
the MTP3/M3UA forwards the received DT signal to the SCCP;
after receiving the DT signal, the SCCP modifies a source SPC in the DT signal into the SPC of the RAN node, modifies a destination SPC into the SPC of the selected MSC server, and then forwards the modified DT signal to the selected MSC server according to the saved information of each signal point on the related connection segment and the reference number of the SCCP connection segment and based on the SCCP protocol.

8. The method according to claim 6, wherein when the received signal is a connection release (RLSD) signal sent by the MSC server, the performing SCCP protocol connection-oriented intermediate node function processing on the intercepted signal and sending the processed signal to the RAN node comprises:
the MTP3/M3UA forwards the received RLSD signal to the SCCP;
after receiving the RLSD signal, the SCCP modifies a source SPC in the RLSD signal into the SPC of the MGW, modifies a destination SPC into the SPC of the RAN node, and then forwards the modified RLSD signal to the RAN node according to the saved information of each signal point on the related connection segment and the reference number of the SCCP connection segment and based on the SCCP protocol; or,
when the received signal is an RLSD signal sent by the RAN node, the performing SCCP protocol connection-oriented intermediate node function processing on the received signal and sending the processed signal to the MSC server comprises:
the MTP3/M3UA forwards the received RLSD signal to the SCCP;
after receiving the RLSD signal, the SCCP modifies a source SPC in the RLSD signal into the SPC of the RAN node, modifies a destination SPC into the SPC of the MSC server, and then forwards the modified RLSD signal to the selected MSC server according to the saved information of each signal point on the related connection segment and the reference number of the SCCP connection segment and based on the SCCP protocol.

9. The method according to claim 8, further comprising:
returning, by the SCCP, a return confirmation (RLC) signal to the MSC server according to the SCCP protocol after forwarding the RLSD signal to the RAN node; or
returning, by the SCCP, an RLC signal to the RAN node according to the SCCP protocol after forwarding the RLSD signal to the MSC server.

10. The method according to claim 6, wherein when the received signal is a CR signal sent by the MSC server, the performing SCCP protocol connection-oriented intermediate node function processing on the intercepted signal and sending the processed signal to the RAN node comprises:
the MTP3/M3UA forwards the received CR signal to the SCCP;
after receiving the CR signal, the SCCP modifies a source SPC in the received CR signal into the SPC of the MGW, modifies a destination SPC into the SPC of the RAN node, and then sends the modified CR signal to the RAN node according to the SCCP protocol, and saves information of each signal point on the related connection segment and the reference number of the SCCP connection segment in the intermediate point data area of the MGW;
when the received signal is a CC signal returned by the RAN node, the performing SCCP protocol connection-oriented intermediate node function processing on the received signal and sending the processed signal to the MSC server comprises:
the MTP3/M3UA forwards the received CC signal to the SCCP;
after receiving the CC signal, the SCCP modifies a source SPC in the received CC signal into the SPC of the RAN node, modifies a destination SPC into the SPC of the MSC server, and then sends the modified CC signal to the MSC server according to the SCCP protocol, and saves information of each signal point on the related connection segment and the reference number of the SCCP connection segment in the intermediate point data area of the MGW.

11. The method according to claim 1, 2 or 3, further comprising:
when it is determined that interception is not needed, and a destination SPC in a message is not a local SPC, the MGW directly sends the received signal to the RAN node.

12. A network for realizing a Mobile Switching Center (MSC) pool network function, comprising: a Radio Access Network (RAN) node, a Media GateWay (MGW) and an MSC server; wherein,
the RAN node is configured to send a signal to the MGW, and/or receive a signal from the MGW;
the MGW is configured to, after receiving a signal from the RAN node, perform Signal Connection Control Part (SCCP) protocol connection-oriented intermediate node function processing on the received signal and send the processed signal to the MSC server; and/or, the MGW is configured to, after receiving a signal from the MSC server, determine whether the received signal needs to be intercepted, if it is determined the received signal needs to be intercepted, intercept the received signal, perform SCCP protocol connection-oriented intermediate node function processing on the intercepted signal, and send the processed signal to the RAN node; and
the MSC server is configured to receive a signal from the MGW, and/or send a signal to the MGW.

13. The network according to claim 12, wherein,
the MGW is further configured to configure that a signal point of the MGW itself has an SCCP, add a pool function switch attribute to a related configuration item of a signal point of the RAN node, set the attribute as enabling a pool function for an RAN node needing proxy, set the attribute as closing a pool function for an RAN node not needing proxy; configured to intercept all signals sent to the RAN node enabling a pool function, configure a Signal Point Code (SPC) of each MSC server, configure a corresponding Base Station System Application Part (BSSAP) subsystem and/or Radio Access Network Application Part (RANAP) subsystem for each signal point; correspondingly configure an SPC of the RAN node, and configure a corresponding BSSAP subsystem and/or RANAP subsystem for each signal point while configuring a local BSSAP subsystem and/or RANAP subsystem;
the RAN node is further configured to configure an SPC of its own MSC server as an SPC of its corresponding MGW; or
the MGW is further configured to configure its own SPC as an SPC of its corresponding MSC server.

14. The network according to claim 13, wherein the MGW further comprises: a Message Transfer Part level 3 (MTP3)/an MTP3-User Adaption layer (M3UA) module and an SCCP module; wherein,
the MTP3/M3UA module is configured to, after receiving a signal from the RAN node, forward the received signal to the SCCP module; and/or determine whether a received signal from the MSC server needs to be intercepted according to saved configuration information, and forward the received signal to the SCCP module if it is determined the received signal needs to be intercepted;
the SCCP module is configured to, after receiving a signal from the MTP3/M3UA module, process the signal, and send the processed signal to the MSC server and/or the RAN node according to an SCCP protocol.

15. The network according to claim 14, wherein the MGW further comprises a Non-Access Stratum Node Selection Function (NNSF) module, which is configured to calculate which MSC server serves as a selected MSC server according to a load control algorithm of a service layer, and send the selected result to the SCCP module;
the SCCP module is further configured to, after receiving the selected result from the NNSF module, find an SPC of the selected MSC server according to the saved SPC to which the MSC server corresponds.

16. The network according to any one of claims 12 to 15, wherein,
the MGW is further configured to, when it is determined that interception is not needed, directly send a received signal to the RAN node.
